Europäisches Patentamt

European Patent Office

Office européen des brevets

(11) Publication number: **0 237 062 B1**

# EUROPEAN PATENT SPECIFICATION

(45) Date of publication of patent specification: **03.06.92**  (51) Int. Cl.⁵: **G03C 3/00,** //C08F210/02

(21) Application number: **87103558.0**

(22) Date of filing: **11.03.87**

(54) **Container for photographic film cartridge.**

(30) Priority: **12.03.86 JP 52660/86**

(43) Date of publication of application:
**16.09.87 Bulletin  87/38**

(45) Publication of the grant of the patent:
**03.06.92 Bulletin  92/23**

(84) Designated Contracting States:
**DE NL**

(56) References cited:
**EP-A- 0 004 651**

**PLASTIOUES MODERNES ET ELASTOMERES,
vol. 34, no. 3, April 1982, pages 52-54, Paris,
FR; H. GUYOT: "PE linéaire: spécialité ou
"commodité""**

(73) Proprietor: **FUJI PHOTO FILM CO., LTD.
210 Nakanuma Minami Ashigara-shi
Kanagawa 250-01(JP)**

(72) Inventor: **Akao, Mutsuo
Fuji Photo Film Co., Ltd. 2-1, Ougi-cho
1-chome
Odawara-shi Kanagawa(JP)**
Inventor: **Sata, Toshio
Fuji Photo Film Co., Ltd. 2-1, Ougi-cho
1-chome
Odawara-shi Kanagawa(JP)**

(74) Representative: **Patentanwälte Grünecker,
Kinkeldey, Stockmair & Partner
Maximilianstrasse 58
W-8000 München 22(DE)**

## Description

This invention relates to the use of a resin for a cap of a container for a photographic film cartridge.

A conventional cap of the container for a photographic film cartridge is made of high-pressure branched low-density polyethylene (LDPE) resin having a density of 0.927 $g/cm^3$ (ASTM D 1505) and a melt index of 4.0 g/10 min (ASTM D 1238, MI). This resin is superior in flexibility at a low temperature, fitness of the cap and body, compressive strength, little burr and little gate mark.

However, when using the LDPE resin, molding troubles, such as a short shot of the molten resin, camber, kink and deformation, frequently occur. Its insufficient heat stability is also a problem. The LDPE resin staying in a continuous molding machine at its screw, manifold, hot runner or other places is gradually colored brown or dark brown by heat. This colored resin is gradually extruded to cause coloring troubles. The generating rate of colored products is as high as 3 to 10%, and these products should be extracted by a checker or a checking machine. A more important problem is that when coloring trouble occurs, the molding machine must be disassembled and washed to remove the colored resin completely. Much effort and long time are spent for this cleaning work. Since the MI of the LDPE is low, its temperature should be high at the molding. As a result, the molding cycle becomes longer.

In order to solve the coloring problem, caused by blending carbon black, not only the appearance of the container becomes unfavourable but also the manufacturing costs are elevated. Furthermore, when the whole container is colored black, the inside of the container becomes hot in the sunshine. This causes a degradation of the photographic film contained therein.

A metal container is also known (e.g. Japanese Utility Model KOKOKU No. 58-46413). However, a metal container is expensive, and its mass-producibility is inferior to a plastic container. Accordingly, it is not utilized at present.

EP-A-4651 discloses a molded article comprising low density ethylene hydrocarbon copolymer wherein said copolymer has a Mw/Mn in the range of from about 2,7 to 4,1; a total unsaturation group content of from about 0,1 to 0,3 C = C/1000 C atoms; and a density of about ≥ 0,91 to ≤ 0,94.

Plastiques Moderne et Elastomeres, Vol. 34, Nr. 3, April 1982, p. 52-54 discloses the advantages of low-pressure linear low-density polyethylene.

It is the object of the present invention to provide a resin for a cap of a container for a photographic film cartridge which is produced without coloring or molding troubles and which is superior in flexibility, fitness of the cap and body and compressive strength.

Said object is achieved by the use of a resin containing more than 20% by weight of a low-pressure linear low-density polyethylene which is a copolymer of ethylene and butene-1 and has a density of 0,90 to 0,93 $g/cm^3$ and a melt index of 8 to 60g/10 min for a cap of a container for a photographic film cartridge.

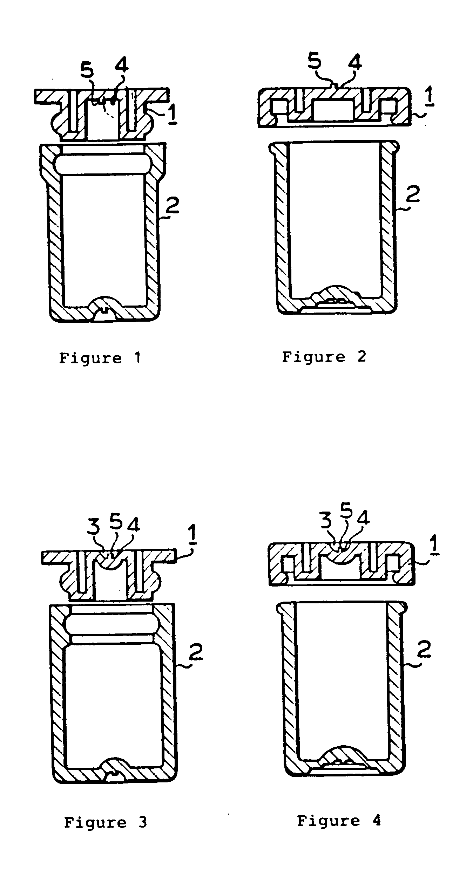

Figures 1 to 4 are sectional side views indicating several examples of the container for which the present resin is applied.

The cap of the container is composed of a resin containing a particular linear low-density polyethylene (L-LDPE).

L-LDPE is a copolymer of ethylene and $\alpha$-olefin, and it has a linear structure with short branches. The carbon number of the $\alpha$-olefin is 3-13, and its ethylene content is usally 85-99.5. mol.%. Such a L-LDPE is manufactured by a vapour phase or liquid phase low or medium pressure method or a modified high-pressure polymerization method. Examples of L-LDFE are "UNIPOLE" and "TUFLIN" (trade name, UCC), "DOWLEX" (trade name, Dow Chemical Co., Ltd.), "STAMILEX" (trade name, DSM), "SUCLEAR" (trade name, Dupont de Nemour, Canada), "MARLEX" (trade name, Phillips Co. , Ltd.), "ULTZEX" and "NEOZEX" (trade names, Mitsui Petroleum Chemical Industries Co., Ltd.), "NISSEKI LINIREX" (trade name, Nippon Petrochemicals Co., Ltd.), "IDEMITSU POLYETHYLENE-L" (Idemitsu Petrochemical Co., Ltd.) and "NUC POLYEHTYLENE-LL" (trade names, Nippon Unicar Co., Ltd. ).

The L-LDPE used in the present invention is a copolymer of ethylene and butene-1 having a density of 0.90 to 0.93 $g/cm^3$ and a melt index (MI) of 8 to 60 g/10 min. This L-LDPE resin is superior in injection molding, and molding troubles hardly occur. Its properties are similar to the conventional LDPE resin, however, its heat resistance is higher than the LDPE resin by 10°C or more. When its density is less than 0.90 $g/cm^3$, the heat resistance becomes insufficient to cause coloring troubles. Moreover, the rigidity also becomes inferior. On the other hand, when the density is beyond 0.93 $g/cm^3$, the MI becomes lower than 8 g/10 min. This L-LDPE resin is too rigid, and the fitness of the cap and the body becomes worse. As a result, the cap is liable to detach when dropped. When the MI is lower than 8 g/10 min, the melt viscosity becomes high to cause molding troubles. When the temperature of the molten resin is elevated in order to lower the viscosity, coloring troubles occur.

The molding cycle is elongated, and roping and gate mark troubles also occur. On the other hand, when the MI is beyond 60 g/10 min, the rigidity becomes little. Molding troubles such as roping and burr also occur. Such a L-LDPE is manufactured by a vapour phase method (UNION CARBIDE,MITSUBISHI PETROCHEMICAL CO., LTD MITSUBISHI CHEMICAL INDUSTRIES LTD., NIPPON UNIT CO., LTD., EXXON, MOBIL, SABIC, SHELL CANADA, ESSO CANADA, AMOCO, ESSOCHEM, EUROPE and NOVA CORP.), a liquid phase method (DUPONT CANADA, PHILIPS, SOLVAY, IDEMITSU PETROCHEMICAL CO., LTD., NIPPON PETROCHEMICAL CO., LTD., DSM-STAMICARBON and ELPASO) and a modified high-pressure polymerization method (CDF CHIMIE, TOYO SODA MANUFACTURING CO., LTD., SUMITOMO CHEMICAL CO., LTD., ASAHI CHEMICAL INDUSTRIES CO., LTD.) The content of the L-LDPE resin is more than 20 wt.%.

The oxidation inhibitor is added in order to prevent coloring of the cap obtained in the invention. This oxidation inhibitor may be a phenol oxidation inhibitor, a sulfur-containing oxidation inhibitor or a phosphorus-containing oxidation, inhibitor. The phenol oxidation inhibitors include n-octadecyl-3-(3',5'-di-t-butyl-4'-hydroxyphenyl)propionate, 2,6-di-t-butyl-4-methylphenol, 2,6-di-t-butyl-p-cresol, 2,2'-methylenebis-(4-methyl-6-t-butylphenol), 4,4'-thiobis(3-methyl(3-methyl-6-t-butylphenol), 4,4'-butylidenebis(3-methyl-6-t-butylphenol), stearyl-$\beta$-(3,5-di-4-butyl-4-hydroxyphenyl)propionate, 1,1,3-tris(2-methyl-4-hydroxy-5-t-butylphenyl)butane, 1,3,5-trimethyl-2,4,6-tris(3,5-di-t-butyl-4-hydroxybenzyl)benzene and tetrakis[methylene-3-(3',5'-di-t-butyl-4'-hydroxyphenyl)propionate]methane. The sulfur-containing oxidation inhibitors include dilauryl-3,3'-thiodipropionate, dimyristyl-3,3'-thiodipropionate, laurylstearylthiodipropionate, distearyl-3,3'-thiodipropionate and ditridecyl-3,3'-thiodipropionate. The phosphorus-containing oxidation inhibitors include trinonylphenylphosphite and triphenylphosphite. Among them, the phenol oxidation inhibitors are the most preferable. Commercial products belonging to the phenol oxidation inhibitors include "IRGANOX" (CIBA-GEIGY AG) and "SUMILIZER BHT", "SUMILIZER BP-76","SUMILIZER WX-R" and "SUMILIZER BP-101" (SUMITOMO CHEMICAL CO., LTD). Two or more oxidation inhibitors may be combined. The content of the oxidation inhibitor is usually 0.001 to 1 wt.%. In the case that two or more oxidation inhibitors are added, the above content is the total amount of them. When the content is less than 0.001 wt.%. the effect of blending does not appear. While, when the content is more than 1 wt.%, the photographic film placed in such a container is badly influenced by the oxidation inhibitor. Accordingly, a lower content in the range capable of preventing coloring is preferable. When the resin of the cap contains at least one more resin such as a LDPE resin in addition to the L-LDPE resin, the oxidation inhibitor may be blended to either or both of the L-LDPE resin and the other resin(s). Futhermore, the effect of the oxidation inhibitor synergistically appears by blending it with carbon black.

In addition to the L-LDPE resin and the oxidation inhibitor, the cap obtained in the invention may contain another resin. A suitable resin is the LDPE resin having a density of 0.90 to 0.93 g/cm$^3$ and a MI of 4 to 50 g/10 min.

By blending this resin, the load of the screw lowers, and melt fracture hardly occurs because of a low melt viscosity. Besides, the temperature of the molten resin can be lowered, and the molding cycle can be shortened. These merits may be caused because the molecular weight distribution of the LDPE resin is broader than that of the L-LDPE resin and its molecular structure is branched. When its density is less than 0.90 g/cm$^3$, the rigidity becomes less, and coloring troubles occur because of less heat resistance. On the other hand, when the density is beyond 0.93 g/cm$^3$ the resin becomes too rigid. As a result, the fitness of the cap and the body is worse, and the cap is liable to detach when dropped. Besides, the melt viscosity becomes high to cause molding troubles because of the high molecular weight. When the temperature of the molten resin is elevated in order to lower the viscosity, coloring troubles frequently occur. The molding cycle is elongated, and roping and gate mark troubles also occur. When the MI is lower than 4 g/10 min, the troubles are similar to the case wherein the density is beyond 0.93 g/cm$^3$. while, when the MI is beyond 50 g/10 min, the troubles are similar to the case wherein the density is less than 0.90 g/cm$^3$. Commercial LDPE resins are "SUMIKATHENE" (SUMITOMO CHEMICAL CO., LTD.), "MITSUBISHI POLYETHY" (MITSUBISHI PETROCHEMICAL CO., LTD.), "MIRASON" (MITSUI POLYCHEMICALS CO., LTD.), "NUC POLYETHYLENE" (NIPPON UNICAR CO., LTD.), "UBE POLYETHYLENE" (UBE INDUSTRIES LTD.), "NISSEKI REXLON" (NIPPON PETROCHEMICALS CO, LTD.), "NIPOLON" (TOYO SODA MANUFACTURING CO., LTD.), "SHOLEX" (SHOWA DENKO K.K), "NOVATEC-L" (MITSUBISHI CHEMICAL INDUSTRIES LTD.), "SUNTEC-LD" (ASAHI CHEMICAL INDUSTRIES CO., LTD.) The content of the LDPE resin is less than 80 wt.%, and a suitable content is 5 to 70 wt.%.

In order to drove the moldability and the antistatic property, a lubricant is preferably added to the resin of the cap obtained in the invention. its suitable content is in the range of 0.01 to 1 wt.%. When the content is less than 0.01 wt.%. the improvement of the moldability is insufficient. While when the content is beyond 1 wt.%, excess lubricant badly influences the photographic film placed in the container. Moreover, the cap bcomes sticky, and dusts adhere on it. The screw of the molding machine slips, and thereby, the molding cycle is elongated. Examples of commercial lubricants suitable for use in the present invention include;

Silicone lubricants: "SHINETSU SILICONE" (Shinetsu Chemical Co., Ltd.), "TORAY SILICONE" (Toray Silicone Co., Ltd.)

Oleic acid amide lubricants; "ARMOSLIP-CP" (Lion Akzo Co., Ltd.), "NEWTRON" and "NEWTRON E-18" (Nippon Fine Chemical Co., Ltd.), "AMIDE-O" (Nitto Kagaku K.K.), "DIAMID O-200" and "DIAMID G-200" (Nippon Kasei Chemical Co., Ltd.), "ALFLOW E-10" (Nippon Oil and Fats Co., Ltd.)

Erucic acid amide lubricants; "ALFLOW P-10" (Nippon Oil and Fats Co., Ltd.)

Stearic acid amide lubricants; "ALFLOW S-10" (Nippon Oil and Fats Co., Ltd.), "NEWTRON 2" (Nippon Fine Chemical Co., Ltd.), "DIAMID 200" (Nippon Kasei Chemical Co., Ltd.)

Bis fatty acid amide lubricants; "BISAMIDE" (Nitto Kagaku K.K.), "DIAMID-200 BIS" (Nippon Kasei Chemical Co., Ltd.), "ARMOWAX,EBS" (Lion Akzo Co., Ltd.)

Alkylamine lubricants; "ELECTROSTRIPPER TS-2" (Kao Corp.)

A coloring material may be blended. As coloring material, dyes, pigments, metal powders, metal fibers and metal flakes, are usable. Examples of the coloring material are as follows;

White coloring material; Titanium oxide, calcium carbonate, mica, zinc, oxide, clay, barium sulfate, calcium sulfate or magnesium silicate;

Yellow coloring material; Titanium yellow, yellow iron oxide, chrome titanium yellow, disazo pigment, vat pigment, quinophthalene pigment or isoindolenone;

Red coloring material; Red iron oxide, disazo pigment, berlin pigment, monoazo lake pigment, or condensed azo pigment;

Blue coloring material; Cobalt blue, ultramarine, Cyanine Blue;

Green coloring material; Chromium oxide green, titanium green or Cyanine Green;

Black coloring material; Carbon black or black iron oxide;

Silver coloring material; Aluminium powder, aluminium paste or tin powder.

Among them, carbon black is preferable because of its synergistically antioxidative effect, its shielding of coloring trouble and its inexpensiveness. The content of coloring material is preferably less than 3 wt.% such as 0.1 to 1 wt.%.

Various additives in addition to those mentioned previously may be added to the resin for the cap. Examples of the additives are described below.

(1) Plasticizers;

phthalic acid esters, glycol esters, fatty acid esters or phosphoric acid esters;

(2) Stabilizers;

lead compounds, cadmium compounds, zinc compounds, alkaline earth metal compounds or organic tin compounds;

(3) Antistatic agents;

cationic surfactants, anionic surfactants, nonionic surfactants or ampholytic surfactants;

(4) Flame retardants;

phosphoric acid esters, phosphoric acid ester halides, halides, inorganic materials or polyols containing phosphorous;

(5) Fillers;

alumina, kaolin, clay, calcium carbonate, mica, talc, titanium oxide or silica;

(6) Reinforcing agents;

glass lobing, metallic fiber, glass fiber, glass milled fiber or carbon fiber,

(7) Nucleating agents;

inorganic nucleating agents or organic nucleating agents (such as dibenzylidenesorbitol)

(8) Vulcanizing agents;

vulcanization accelerator or acceleration assistant;

(9) Deterioration preventing agents;

ultraviolet absorber, metal deactivator or peroxide decomposing agent;

(10) Coupling agents;

silane compounds, titanium compounds, chromium compounds or aluminum compounds;

(11) Various thermoplastic resins, rubbers, particularly, polyolefin thermoplastic resins.

The cap obtained in the invention is of a fitting type. Its form is not limited, and examples are illustrated in figures 1 to 4. in the drawings, 1 represents the cap, 2 represents the container body, 3 represents the pit, 4 represents the gate portion, and 5 represents the gate mark.

The molding method of the cap is not limited. The cap may be produced by hot runner type injection molding, inter mold vacuum injection molding or stack molding.

Examples of the form of the container body are also illustrated in figures 1 to 4. The material of the container body is usually a plastic. Suitable plastics include polyolefins such as polyethylene, polypropylene and polyester. The container body is preferably more rigid than its cap. The container body may be produced for example by injection molding, injection blow molding or blow molding.

In the case of a molding resin for the cap of the invention, the heat resistance is high, and this resin smoothly flows in a molding machine though the temperature of the molten resin is relatively low. Accordingly, coloring troubles hardly occur, and the molding cycle can be shortened. This resin is also superior in injection moldability, and molding troubles such as roping, camber, kink and deformation are rare. The mold shrinkage is also little. Since the fitting strength of the cap and container body is large, the cap is scarcely detached during the packaging process. The water vapour permeability of the resin of the cap is little, and the moisture proofness of the container is high. The following examples illustrate the invention.

EXAMPLES

The cap illustrated in figure 3 was molded by using a molding machine manufactured by SUMITOMO HEAVY INDUSTRIES LTD. (trade name "NETSTAL") at a mold clamping pressure of 150000 kg. The molding number per ounce was 24, and the type of runner was a hot runner.

The resin of Example 1 employed for molding the cap was a mixture of 40 wt.% of the L-LDPE resin "NUC G 5391" (NIPPON UNICAR CO. LTD.) of a copolymer of ethylene and butene-1 having a density of 0.926 $g/cm^3$ and a MI of 50 g/10 min and 60 wt.% of a LDPE resin having a density of 0.927 $g/cm^3$ and a MI of 4.0 g/10 min containing an oxidation inhibitor.

The resin of Example 2 employed for molding the cap was a mixture of 80 wt.% of the L-LDPE resin and 20 wt.% of the LDPE resin containing the oxidation innibitor, which are the same as in Example 1.

The resin of Example 3 employed for molding the cap was the L-LDPE resin of Example 1 alone.

The resin of Example 4 employed for molding the cap was the L-LDPE resin "NUC G 5381" (NIPPON UNICAR CO. LTD.) of a copolymer of ethylene and butene-1 having a density of 0.924 $g/cm^3$ and a MI of 20 g/10 min containing the oxidation inhibitor of Example 1, alone.

The resin of Example 5 employed for molding the cap was a mixture of 60 wt.% of the L-LDPE resin "STAMLEX 1258" (DSM-STAMICARBON) of a copolymer of ethylene and butene-1 manufactured by a low-pressure liquid phase method having a density of 0.925 $g/cm^3$ and a MI of 25 g/10 min containing the oxidation inhibitor of Example 1 and 40 wt.% of the LDPE resin "MITSUBISHI POLYETHYL YK-60".

The resin of the comparative cap 1 was the L-LDPE resin "ULTZEX #20200J" (MITSUI PETROCHEMICAL INDUSTRIES CO. LTD.) of a copolymer of ethylene and 4-methylpentene-1 having a density of 0.920 $g/cm^3$ and a MI of 18 g/10 min alone.

The resin of the comparative cap 2 was a mixture of 10 wt.% of the L-LDPE resin "NUC G 5381" and 90 wt.% of the LDPE resin "MITSUBISHI POLYETHY YK-60".

The resin of the comparative cap 3 was the L-LDPE resin "NUC G 5361" (NIPPON UNICAR CO. LTD.) of a copolymer of ethylene and butene-1 having a density of 0.925 $g/cm^3$ and a MI of 4.0 g/10 min containing the oxidation inhibitor of Example 1.

The resin of the conventional cap 1 was the LDPE resin as described in Example 1.

As container body, the one illustrated in figure 3 was employed. The resin of the body was a random type polypropylene resin containing a nucleating agent. This resin comprised the polymer content of propylene units of which was 96 mol.% and the content of ethylene units of which was 4 mol.%. The MI of the resin was 40 g/10 min, the yielding point of the tensile stress was 370 $kg/cm^2$, the bending elastic modulus was 14,000 $kg/cm^2$, and the notched impact strength at 20°C measured by an Izod testing machine was 5.0 kg.cm/cm.

Constitutions of the caps and their properties are tabulated in Table 1.

Table 1

| | Unit | Invention | | | | | Comparative | | | Conventional |
|---|---|---|---|---|---|---|---|---|---|---|
| | | 1 | 2 | 3 | 4 | 5 | 1 | 2 | 3 | |
| L-LDPE | | | | | | | | | | |
| α-Olefin | - | $C_4$ | $C_4$ | $C_4$ | $C_4$ | $C_4$ | $C_6$ | $C_4$ | $C_4$ | - |
| Density | g/cm$^3$ | 0.926 | 0.926 | 0.926 | 0.924 | 0.925 | 0.920 | 0.924 | 0.925 | - |
| MI | g/10 min. | 50 | 50 | 50 | 20 | 25 | 18 | 20 | 4 | - |
| Content | wt.% | 40 | 30 | 100 | 100 | 60 | 100 | 10 | 100 | - |
| LDPE | | | | | | | | | | |
| Density | g/cm$^3$ | 0.927 | 0.927 | - | - | 0.927 | - | 0.927 | - | 0.927 |
| MI | g/10 min. | 4.0 | 4.0 | - | - | 4.0 | - | 4.0 | - | 4.0 |
| Content | wt.% | 60 | 20 | - | - | 40 | - | 90 | - | 100 |
| Coloring Degree | - | B | B | B | B | B | B | D | D | E |
| Temperature of Molten Resin | °C | 170 | 150 | 140 | 160 | 170 | 180 | 190 | 220 | 200 |
| Molding Cycle | s | 10 | 8 | 7 | 9 | 10 | 12 | 12 | 16 | 13 |
| Molding Trouble | - | B | B | B | B | B | B | C | E | C |
| Roping, Gate Mark | - | B | B | B | B | B | E | B | D | B |
| Cap Detachment | - | B | B | B | B | B | B | C | B | D |
| Compressive Strength | kg | 31 | 33 | 35 | 37 | 34 | 38 | 25 | 41 | 21 |
| Fitting Strength | kg | 2.3 | 2.5 | 2.7 | 2.8 | 2.4 | 3.0 | 1.8 | 3.1 | 1.5 |
| Water Vapor Permeability | mg/24 h | 2.2 | 1.8 | 1.5 | 1.3 | 1.7 | 1.2 | 3.1 | 1.1 | 4.0 |

The evaluators in Table 1 were carried out as follows.

EP 0 237 062 B1

| A very excellent | B excellent |
|---|---|
| C practical | D having a problem |
| E impractical | |

Testing methods are as follows:

| Density; | ASTM D-1505 |
|---|---|
| Melt Index; | ASTM D-1238 |
| Coloring Degree; | Coloring degree of the product produced continuously at the optimal temperature for each resin without molding trouble. |
| Temperature of Molten Resin; | The resin temperature at the optimal molding condition for each resin where molding trouble hardly occurs. |
| Molding Cycle; | Time of one shot of injection-cooling-taking out at the optimal molding condition. |
| Molding Trouble; | Occurrence of molding trouble such as camber, bottom sink mark, short shot and burr at the optimal molding condition for each resin. |
| Roping, Gate Mark; | Occurrence of long roping formed at gate mark portion in 50 shots (1200 pieces) of products. |
| Cap Detachment; | A photographic film cartridge containing a photographic film of 36 exposures ("Fuji Color HR-100", 36 Ex.) was placed in each container. Each container was dropped from 5 m height to the concrete floor, and the number of cap-detached containers were counted. In order to avoid the detachment of the cap caused by breakage of the container body. A container body made of polypropylene resin containing polyethylene in a high content was used. |
| Compressive Strength; | A spring balance was provided with a grip member. Each cap was grasped by the grip member, and the spring balance was pulled in just upward direction. The force necessary to detach each cap was measured. |
| Water Vapor Permeability; | About 4 g of calcium chloride was exactly weighed, and placed in each container. Each cap was attached, and the container was allowed to stand in a room controlled at 40°C and 90% in humidity for 24 h the increase in the weight of calcium chloride was exactly weighed by a precision balance, and the increase amount was employed as water vapor, permaebility. |

## Claims

1. Use of a resin containing more than 20% by weight of a low-pressure linear low-density polyethylene which is a copolymer of ethylene and butene-1 and has a density of 0.90 to 0.93 g/cm$^3$ and a melt index of 8 to 60 g/10 min for a cap of a container for a photographic film cartridge.

2. The use of claim 1, wherein said resin further contains an oxidation inhibitor.

3. The use of claim 2, wherein said oxidation inhibitor is selected from the group consisting of a phenol oxidation inhibitor, a sulfur-containing oxidation inhibitor and a phosphorus-containing oxidation inhibitor.

4. The use of claim 2 or 3, wherein the content of said oxidation inhibitor is 0.001 to 1 wt.%.

5. The use of any of claims 1 to 4, wherein said resin further contains a high-pressure branched low-density polyethylene having a density of 0.90 to 0.93 g/cm$^3$ and a melt index of 4 to 50 g/10 min.

6. The use of any of claims 1 to 5, wherein said resin further contains 0.01 to 1.wt.% of a lubricant.

7. The use of any of claims 1 to 6, wherein said resin further contains a coloring material.

8. The use of claim 7, wherein said coloring material is carbon black.

**Revendications**

1. Utilisation d'une résine contenant plus de 20 % en poids d'un polyéthylène linéaire basse densité basse pression, consistant en un copolymère d'éthylène et de butène-1, et ayant une masse volumique de 0,90 à 0,93 g/cm$^3$ et un indice de fluidité à chaud de 8 à 60 g/10 min, pour un couvercle de récipient pour cartouche de pellicule photographique.

2. Utilisation selon la revendication 1, dans laquelle la résine contient en outre un inhibiteur d'oxydation.

3. Utilisation selon la revendication 2, dans laquelle l'inhibiteur d'oxydation est choisi parmi un inhibiteur d'oxydation phénolique, un inhibiteur d'oxydation sulfuré et un inhibiteur d'oxydation phosphoré.

4. Utilisation selon la revendication 2 ou 3, dans laquelle la teneur en l'inhibiteur d'oxydation est de 0,001 à 1 % en poids.

5. Utilisation selon l'une quelconque des revendications 1 à 4, dans laquelle la résine contient en outre un polyéthylène ramifié basse densité haute pression, ayant une masse volumique de 0,90 à 0,93 g/cm$^3$ et un indice de fluidité à chaud de 4 à 50 g/10 min.

6. Utilisation selon l'une quelconque des revendications 1 à 5, dans laquelle la résine contient en outre de 0,01 à 1 % en poids d'un lubrifiant.

7. Utilisation selon l'une quelconque des revendications 1 à 6, dans laquelle la résine contient en outre un colorant.

8. Utilisation selon la revendication 7, dans laquelle le colorant consiste en du noir de carbone.

**Patentansprüche**

1. Verwendung eines Harzes, enthaltend mehr als 20 Gew.-% eines linearen Niederdruckpolyethylens niedriger Dichte, das ein Copolymer von Ethylen und Buten-1 ist und eine Dichte von 0,90 bis 0,93 g/cm$^3$ und einen Schmelzindex von 8 bis 60 g/10 min besitzt, für eine Kappe eines Behälters für eine fotographische Filmpatrone.

2. Verwendung nach Anspruch 1, worin das Harz weiterhin einen Oxidationsinhibitor enthält.

3. Verwendung nach Anspruch 2, worin der Oxidationsinhibitor aus der Gruppe, bestehend aus einem Phenoloxidationsinhibitor, einem schwefelhaltigen Oxidationsinhibitor und einem phosphorhaltigen Oxidationsinhibitor, gewählt wird.

4. Verwendung nach Anspruch 2 oder 3, worin der Gehalt des Oxidationsinhibitors 0,001 bis 1 Gew.-% beträgt.

5. Verwendung nach einem der Ansprüche 1 bis 4, worin das Harz weiterhin ein verzweigtes Hochdruckpolyethylen niedriger Dichte mit einer Dichte von 0,90 bis 0,93 g/cm$^3$ und einem Schmelzindex von 4 bis 50 g/10 min enthält.

6. Verwendung nach einem der Ansprüche 1 bis 5, worin das Harz weiterhin 0,01 bis 1 Gew.-% eines Gleitmittels enthält.

7. Verwendung nach einem der Ansprüche 1 bis 6, worin das Harz weiterhin ein Färbungsmaterial enthält.

8. Verwendung nach Anspruch 7, worin das Färbungsmaterial Ruß ist.

Figure 1

Figure 2

Figure 3

Figure 4